(19) Europäisches Patentamt
European Patent Office
Office européen des brevets

(11) **EP 3 327 273 B1**

(12) **EUROPEAN PATENT SPECIFICATION**

(45) Date of publication and mention
of the grant of the patent:
**26.02.2020 Bulletin 2020/09**

(21) Application number: **17202191.7**

(22) Date of filing: **16.11.2017**

(51) Int Cl.:
**F02D 41/00** *(2006.01)*      **F02D 41/14** *(2006.01)*
**F02D 41/24** *(2006.01)*      **F02D 41/22** *(2006.01)*

(54) **AN INFERENTIAL SENSOR**

INFERENZSENSOR

CAPTEUR INFÉRENTIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2016 PCT/US2016/064036
12.10.2017 US 201715782669**

(43) Date of publication of application:
**30.05.2018 Bulletin 2018/22**

(73) Proprietor: **Garrett Transportation I Inc.
Torrance, CA 90504 (US)**

(72) Inventors:
• **PACHNER, Daniel
Morris Plains, NJ New Jersey 07950 (US)**
• **UCHANSKI, Michael
Morris Plains, NJ New Jersey 07950 (US)**
• **LANSKY, Lukas
Morris Plains, NJ New Jersey 07950 (US)**

(74) Representative: **Lucas, Peter Lawrence et al
LKGlobal UK Ltd.
Cambridge House, Henry Street
Bath BA1 1BT (GB)**

(56) References cited:
EP-A1- 2 221 465      EP-A2- 1 148 228
EP-A2- 1 416 138      FR-A1- 2 856 738
FR-A1- 2 919 024      US-A1- 2003 029 233

## Description

Background

The present disclosure pertains to sensors, engines, and particularly to components related to emissions reduction of the engines. Prior art document EP 1 416 138 A2 discloses an estimation of EGR flow. Further, prior art document FR 2 856 738 A1 discloses an estimation of exhaust manifold pressure using turbocompressor power balance.

Summary

The disclosure reveals a system and an approach for determining various flows in an internal combustion engine, such as an amount of recirculation exhaust gas flow through a controlled valve, a fresh air mass flow to an intake of an engine, and a pressure at an inlet of a turbine which may also be the pressure at the inlet of a high pressure exhaust gas recirculation (EGR). The disclosure may reveal a method of how a pressure estimate may be useful for determining mass flow rates and/or intervals containing the determined mass flow rates.

Brief Description of the Drawing

Figure 1 is a diagram of a turbocharged diesel engine;
Figure 2 is a schematic chart depicting an uncertainty interval containing a pressure based on an interval for efficiency compared with a pressure sensor installed on an engine for testing; and
Figure 3 is a diagram of a lambda sensor behavior graph.

Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Aspects of the system or approach may be described in terms of symbols in the drawing. Symbols may have virtually any shape (e.g., a block) and may designate hardware, objects, components, activities, states, steps, procedures, and other items.

The mass flows in the turbocharged combustion engine, particularly the fresh air mass flow and the exhaust gas recirculation (EGR) mass flow, are important control parameters which need to be carefully controlled.

The fresh air mass flow may determine the oxygen availability for the fuel combustion. It may be noted that oxygen unavailability may lead to incomplete combustion and generation of soot particles which may either be observed as tailpipe smoke or which may clog the particulate filter. In combustion engines, both gasoline and diesel, the fresh air flow usually needs to be controlled to a desired ratio to the fuel mass flow.

The EGR mass flow may determine the portion of inert three atomic gases $H_2O$ and $CO_2$ in the gas charged to cylinders. An inert content may dissolve the oxygen and increase the thermal capacity of the charged gas. The increased thermal capacity and lowered oxygen availability of the charged gas may both lead to lower peak temperatures in a cylinder which reduces formation of nitrogen oxides NO and $NO_2$ (i.e., $NO_x$). The mass of these harmful oxides produced by engines may be regulated by emission limits.

Although the mass flows are important control parameters, they may not always be easily measured with a sufficient degree of accuracy, robustness, and reliability. Also a cost of such physical sensors may be considered high. The air mass flow sensors based on principles such as hot-film sensors (HFS), or EGR mass flow sensors based on a Venturi tube principle, can be associated with significant costs, calibration efforts, and reliability issues. It may be therefore practical to calculate the mass flows from other physical quantities which can be measured easier, especially if sensors for those physical quantities are already present in the system because of other control or monitoring functions. It may be noted that the physical flow sensors can either be replaced by the calculated values or the calculated values may be used to improve the physical sensor signal, or may be used to diagnose failures of those physical flow sensors.

The quantities which can be measured accurately and with significantly better reliability than mass flows may be the intake side pressures and temperatures, which are temperatures and pressures between the air intake up to the cylinder. The turbo-speed, and oxygen content, namely, oxygen mole fraction in the exhaust gas may also be measured reliably. It may be noted that measuring pressures and temperatures on the exhaust side may be significantly more difficult due to harsh conditions there that can include high temperatures, pressure pulsations, and combustion products such as water considering that water may freeze in winter, aggressive Sulphur compounds, and deposits of soot and oil residues.

A virtual mass flow sensor may calculate the fresh air mass flow, the EGR mass flow, or both, based on those other physical sensors which may be available easier. These calculations may be based on models of the engine components and equations, which describe how the components are coupled and how they interact.

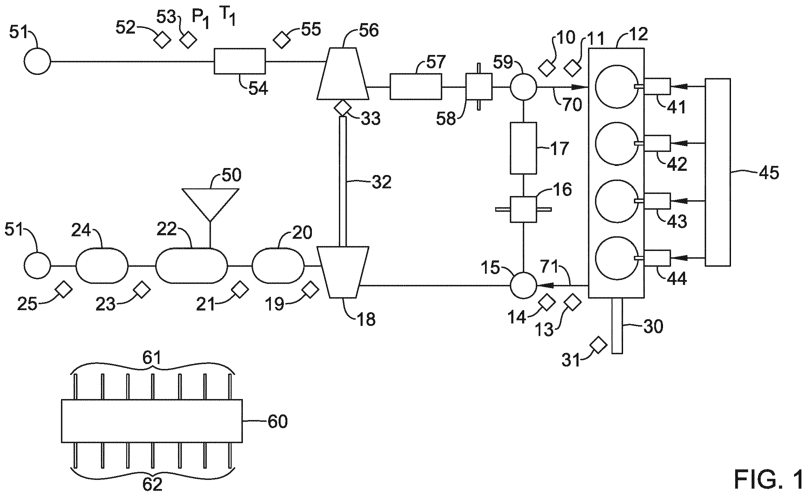

Figure 1 is a diagram of a turbocharged diesel engine. A system of the gas flows in the turbocharged diesel engine with a high pressure EGR valve is shown in the diagram. The diagram shows layout of an internal combustion engine 12 and its peripheral components related to air and fuel supply. Engine 12 may have an intake manifold 70 and an exhaust duct or manifold 71. Intake pressure ($p_2$) and temperature ($T_2$) may be detected with a pressure sensor 10 and a temperature sensor 11, respectively. Exhaust pressure ($p_3$) and temperature ($T_3$) may be detected with a pressure sensor 13 and a temperature sensor 14, respectively. However, most production engines will not necessarily be equipped with sensors 13 and 14 due to a difficulty with sensors placed on the exhaust side.

In operation, air may come in from an ambient environment 51 at an input pressure ($p_1$) and temperature ($T_1$) as indicated by pressure sensor 52 and temperature sensor 53, respectively, positioned before the air filter 54. The air may be compressed by a compressor 56 and flow to a mixing point or plenum 59. Since air becomes hotter when compressed, an engine charge air cooler (CAC) 57 may be used to reduce compressed air temperature. A throttle 58 may be placed downstream of compressor 56 in order to control the pressure in intake manifold 70.

Some exhaust gas may be fed from exhaust manifold 71 through a splitter 15 and through an EGR valve 16 and out of a valve through a cooler 17 to the mixing point or plenum 59 where charged air from the compressor 56 and exhaust gas from EGR valve 16 meet. EGR valve 16 may control an amount of EGR gas to plenum 59. Exhaust gas at an input of EGR valve 16 may have a pressure $p_3$ and a temperature $T_3$. Exhaust gas that is not directed toward EGR valve 16 may go to drive a turbine 18 which turns a shaft 32 at N rotations per unit of time or a rate of angular movement omega ($\omega$) as indicated by a sensor 33. Shaft 32 may drive compressor 56 that outputs the compressed air.

The exhaust gas can pass through a number of aftertreatment devices removing harmful compounds. Firstly, the gas may be passing the diesel particulate filter (DPF) 20 to trap soot particles which may be later burned using just the exhaust heat (passive regeneration) or using an extra diesel fuel injector located at the filter inlet (active regeneration). Some diesel engines may also use a diesel oxidation catalyst (DOC, not shown). Then the gas may be treated in a selective catalyst reduction (SCR) device 22 where most of the nitrogen oxides may be converted into harmless diatomic nitrogen using urea injected by the dosing system 50. In order to control the amount of urea used, SCR device 22 may be equipped with inlet and outlet NOx sensors 21 and 23 which may also provide additional information of the oxygen concentration in the exhaust gas. SCR device 22 may use ammonia created from the urea as a reducing agent to reduce the nitrogen oxides. The excess ammonia which may pass unreacted from SCR 22 as a result of urea overdosing may be removed in the ammonia slip catalyst (AMOX) 24.

Engine 12 cylinders may also be a recipient of fuel via a line or tube 45 to fuel injectors 41, 42, 43 and 44. The fuel from injectors 41, 42, 43 and 44 may mix with the air and EGR gas to the cylinders of engine 12 for combustion to move the pistons and turn the crankshaft for a mechanical rotational output at a shaft 30. Engine speed may be measured by a sensor 31 at shaft 30. Other approaches may be used for measuring engine speed. A lambda or oxygen sensor 19 may be situated in an exhaust duct where an exhaust stream may flow such as, for example, after turbine 18, after DPF 20 as sensor 21, after SCR 22 as sensor 23, after AMOX 24 as sensor 25, or there may be several lambda sensors at several locations, simultaneously. The lambda sensor may be combined with a NOx sensor.

Some acronyms that may be used relative to engine aftertreatment technology may incorporate SCR (selective catalytic reduction), SCRF (SCR on filter), DPF (diesel particulate filter), DOC (diesel oxidation catalyst), LNT (lean NOx trap), and PNA (passive NOx adsorber).

The exhaust stream may mean turbine-out, DOC-out, DPF-out, SCR-in, SCR-out, and even tailpipe-out. Though the oxygen content does not necessarily change significantly in the exhaust stream, it may be affected by some of the oxidations in the aftertreatment devices. Exhaust configurations may consist of, for example, turbine-DOC-DPF-SCR and turbine-PNA/LNT/DOC+SCRF+SCR. The lambda or oxygen sensor may be situated virtually anywhere.

A processor 60 may receive inputs 61 from one or more sensors of sensors 52, 53, 33, 10, 11, 13, 14, 19, 21, 23, 25, via wire or wireless connections. An output 62 from processor 60 may be used for controlling EGR valve 16 or for controlling the throttle 58. Other components, such as coolers 57 and 17, variable geometry of turbine 18 or turbine waste gate, and injectors 41, 42, 43 and 44, may be controlled by outputs 62 from processor 60.

An engine configuration, such as the one in Figure 1, together with mathematical models of the individual elements in the configuration, may define a set of equations from which the sought mass flow and/or pressure values can be solved. In particular, the mass conservation law in the engine configuration of Figure 1 may define that the fresh air mass flow equals turbine mass flow minus fuel mass flow, and define that the EGR mass flow equals charged gas flow minus fresh air mass flow.

The equations may hold at any time up to small and negligible dynamic inaccuracies caused by mass accumulation in the intake and exhaust manifolds. It may be noted that from these equations the sought fresh air mass flow and sought EGR mass flow may be calculated indirectly by first calculating the charged gas mass flow $\dot{m}_{ch}$, the turbine mass flow $\dot{m}_t$ and the fuel mass flow $\dot{m}_f$, and calculating the fresh air flow $\dot{m}_a$ and EGR mass flow $\dot{m}_{EGR}$ in a second step. Below are explanations of how fuel, turbine, and charged gas mass flows can be calculated.

Values of a pressure $p_3$ and a temperature $T_3$ at the exhaust duct or manifold 71 may be parameters used to determine the mass flow rates through turbine and through the EGR valve. Estimating $p_3$ may be an important intermediate step in the process. The estimated mass flow rate through the turbine may be used for indirect estimation of the fresh air rate and EGR mass flow rate. The flows in the system may be related by linear equations representing the mass conservation in the engine:

$$\dot{m}_t = \dot{m}_a + \dot{m}_f$$

$$\dot{m}_{ch} = \dot{m}_a + \dot{m}_{EGR}$$

The fresh air and EGR mass flow rates may be estimated indirectly by calculating the turbine mass flow rate $\dot{m}_t$ and the EGR mass flow rates $\dot{m}_{EGR}$ using the turbine and EGR valve flow models and then solving the above equations. The fuel mass flow $\dot{m}_f$ may virtually always be calculated from the fuel injection quantity per cylinder stroke $q_f$ [mg/cyl/stroke], which may be known to the processor 60; also known is engine speed $N_e$ [rpm], and considering a four stroke engine with $N_{cyl}$ cylinders the fuel mass flow [kg/s] may be indicated by:

$$\dot{m}_f = N_{cyl} \frac{10^{-6}}{120} q_f N_e .$$

The charged gas mass flow $\dot{m}_{ch}$ [kg/s] may be expressed from engine rotational speed $N_e$ [rpm], the engine displacement volume $V_d$ [l], the intake manifold pressure $p_2$ [kPa] and temperature $T_2$ [K], the specific gas constant of the charged gas $R$ [J/kg/K], and the volumetric efficiency parameter $\eta_{vol}$ [-] that may be a property of the engine and may depend on engine speed as well as other parameters such as the engine compression ratio, and the exhaust and intake pressures in view of:

$$\dot{m}_{ch} = \frac{1}{120} \eta_{vol}(N_e) V_d \frac{p_2}{T_2 R} N_e .$$

The turbine mass flow $\dot{m}_t$ [kg/s] may be calculated from the turbine inlet pressure $p_3$, turbine outlet pressure $p_4$, turbine inlet temperature $T_3$, and turbine speed $N_t$. Some turbines may have control parameters such as variable geometry or a waste gate. The basis for this calculation may be an experimental turbine map $M_t(N_t, p_{30}/p_4)$, which defines the turbine mass flow rate for fixed reference inlet pressure $p_{30}$ and temperature $T_{30}$. Using such turbine map, the turbine mass flow $\dot{m}_t$ may be calculated for any inlet pressure $p_3$ and temperature values $T_3$,

$$\dot{m}_t = M_t\left(N_t\sqrt{T_3/T_{30}}, p_3/p_4\right)p_3/p_{30}\sqrt{T_{30}/T_3} .$$

The above calculation of $\dot{m}_t$ may require the values $p_3$, $p_4$, $T_3$ which may not be sensed in some cases. However, other similar equations describing the model components can be added to define these values from available signals. The $T_3$ temperature may be estimated modeling the combustion, heat transfer and gas expansion processes in the cylinder. The post turbine pressure $p_4$ may be expressed considering a model of the flow restriction of the post turbine elements. It is virtually always possible to add equations to calculate the rough mass flows from signals known to processor 60. Engines with double stage turbochargers may have two turbines in a cascade. Maps of both turbines may be then used in the calculations.

The EGR mass flow $\dot{m}_{EGR}$ may be calculated from the following orifice equation,

$$\dot{m}_{EGR} = A(u_{EGR}) \frac{p_3}{\sqrt{T_3}} \Psi\left(\frac{p_3}{p_2}\right) \text{ [kg/s]}$$

where $\Psi$ is a flow function that can be calibrated for a specific valve used, $p_3, T_3$ is pressure and temperature before the EGR valve in the exhaust duct, $p_2$ is pressure after the EGR valve in the intake manifold, and $u_{EGR}$ is a valve position opening angle or valve opening area.

In some cases, the above calculation of $\dot{m}_t$ may require the values $p_3$, $p_4$, $T_3$ which may not be directly sensed. Modern turbocharged engines may be equipped with a $p_2$ sensor. In some cases, pressure $p_3$ may be calculated. Determining pressure $p_3$ is not necessarily sufficient. The $p_4$, $T_3$ need to be determined as well. However, it may be noted that $T_3$ can be determined from the energy balance and engine efficiency (e.g., based on a combustion model), in a cylinder gas expansion model, and a cylinder wall heat loss model. The pressure $p_4$ may be determined from the models of the post turbine element. However, the turbine flow value will normally be most sensitive to errors in $p_3$. As a result, it may be desirable to determine pressure $p_3$.

An approach for determining pressure $p_3$ may be based on the differential equation of the turbo speed which is the mechanical power balance:

$$\frac{d\omega(t)}{dt} = \frac{P_t(t) - P_c(t)}{J\omega(t)}$$

Here $P_t(t)$ [W] is the mechanical power of the turbine, $P_c(t)$ [W] is the mechanical power of the compressor, and $\omega(t)$ [rad/s] is the angular velocity of the turbocharger with the assumed momentum of inertia $J$ [kg.m²].

The mechanical powers of both the turbine and the compressor may depend on pressures, flows, and temperatures around these components. These parameters may be approximated by a reversible isentropic compression formula. The formula may define the power required to compress a mass flow rate $\dot{m}$ [kg/s] from pressure $p_1$ and temperature $T_1$ to pressure $p_2$ is:

$$P = c_p \dot{m} T_1 \left[ \left( \frac{p_2}{p_1} \right)^{\frac{1-\gamma}{\gamma}} - 1 \right]$$

Here $c_p$ [J/kg/K] is the gas specific heat capacity and $\gamma$ is dimensionless the gas specific heat ratio also known as Poisson constant. Because of the reversibility of the isentropic process, the same power, in theory, may again be recovered when expanding the same mass flow rate from $p_2$ back to $p_1$. Because the real process is not reversible, however, some power may be lost (e.g., more power may be needed and less power is recovered).

The loss may be formally represented by considering compressor efficiency parameter $\eta_c$ and turbine efficiency parameter $\eta_t$. Both correction factors may be between zero and one and the normal values range between 0.2 and 0.8 depending on the turbocharger operating point (turbine speed, pressure ratios, and mass flows rates). These efficiencies (e.g., correction factors) may be determined experimentally by running the turbocharger on a gas stand in a number of points. The powers of compressor and turbine may be expressed:

$$P_c(t) = \frac{1}{\eta_c} c_{p,a} \dot{m}_a T_a \left[ \left( \frac{p_0}{p_1} \right)^{\frac{1-\gamma_a}{\gamma_a}} - 1 \right]$$

$$P_t(t) = \eta_t c_{p,e} (\dot{m}_a + \dot{m}_f) T_3 \left[ \left( \frac{p_3}{p_4} \right)^{\frac{1-\gamma_e}{\gamma_e}} - 1 \right]$$

Here, $p_0$ is an ambient pressure. Note that neither the specific heats $c_{p,a}, c_{p,e}$ nor Poisson constants $\gamma_a, \gamma_e$ for the compressor power $P_c$ and turbine power $P_t$ are the same values because the gas compositions are different. The gas composition for the compressor may be fresh air for the compressor and gas composition for the turbine may be exhaust gas (e.g., combustion products). Considering the compressor outlet pressure $p_1$ may be sensed (e.g., the engine does not have a throttle), or can be calculated from the sensed boost pressure $p_2$ subtracting the pressure drop over a throttle, the above equations can be used to solve for $p_3$ simultaneously with the flows.

When determining the pressure $p_3$, the temperature $T_3$ may be calculated before $p_3$, so it can be pre-pared before $p_3$ is solved. Further, although the unknown mass flow $\dot{m}_a$ appears in the above mechanical power balance equation, one can note that both compressor and turbine powers are multiplied by $\dot{m}_a$ and $\dot{m}_a + \dot{m}_f$ respectively. These values may be similar. It may be noted that $\dot{m}_f$ is at least 14.7 or 14.5 times smaller than $\dot{m}_a$ because it is the stoichiometric mass ratio of the gasoline and diesel fuels respectively. The unknown flow gets almost cancelled. Therefore the simultaneous solution of $\dot{m}_a$ and $p_3$ may be obtained by a rapidly converging iterative method. Although a simultaneous estimation of the throttle pressure drop and $p_4$ may make the solution more complicated, the principles may remain the same.

The above approach may be described as calculating $p_3$ which generates sufficient power to achieve the sensed boost pressure considering the turbine inlet temperature $T_3$, turbine and compressor efficiencies, turbocharger rotational speed $\omega(t)$, and turbine acceleration $d\omega(t)/dt$. For this reason, the above calculations may be used conveniently in connection with a physical turbo speed sensor installed on the engine. It may be noted that the turbo speed sensors may be very accurate and the signal allows for direct calculation of the acceleration using, for example, a filtered derivative (e.g., a time derivative) of the signal. Using such an estimate of the turbocharger acceleration, the $p_3$ may be correctly calculated even during significantly transient operation of the turbocharger.

When multiplying the mechanical power balance equation with $\eta_t$, it may become apparent that steady-state $p_3$ may depend almost exclusively on the product $\eta_t \eta_c$, not on the individual efficiencies independently. In fact, there is a marginal dependency on $\eta_c$ through $T_3$ because compressor efficiency slightly affects temperatures. However this may be neglected with very little impact. The main uncertain parameter in the equation may, thus, be the product $\eta_{tc} = \eta_t \eta_c$. The product represents the mechanical efficiency of the turbocharger as a whole, without distinguishing both components.

The approach may account for the uncertainty of $\eta_{tc}$. Both of the compressor and the turbine may have high efficiencies at an area of operating points, known as Efficiency Island. The efficiency may rapidly fall to zero on a border of the Efficiency Island. The estimated efficiency of the turbocharger is easier when both of the compressor and the turbine are in the Efficiency Islands, where the efficiency may be flat and almost constant. This is a general property of a smooth functions close to extreme points. On the border, off the peak efficiency, (e.g., the estimation of the actual turbocharger efficiency) may be problematic because the efficiency may be sensitive to actual turbo speed, output/input pressure ratios, or the mass flow rates. The $p_3$ estimate can thus be represented as an interval in which the actual $p_3$ may be contained, and the width of the interval may be based on the interval containing the true efficiency. This interval may be based on the turbine and the compressor efficiency maps and may account for various uncertainties and aging effects: the efficiency of a new turbocharger may be generally higher than the actual turbocharger in the vehicle.

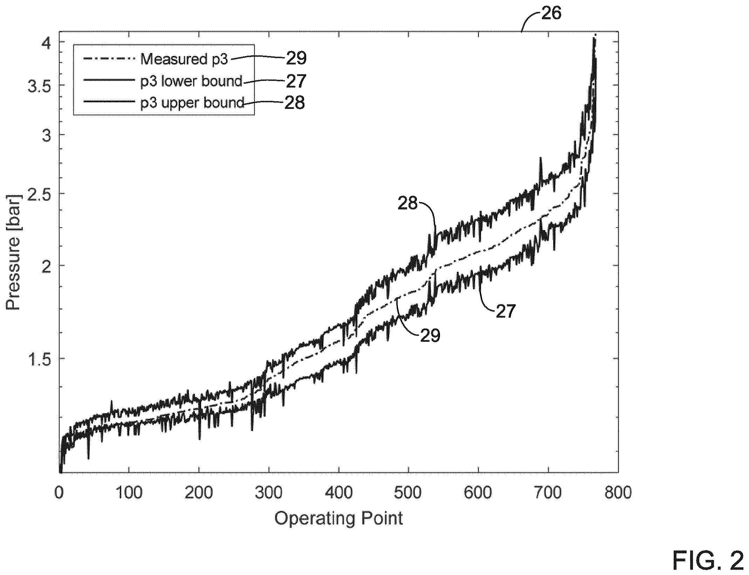

Figure 2 is a schematic chart 26 depicting an uncertainty interval containing $p_3$ based on an interval for the efficiency compared with $p_3$ sensor installed on an engine for testing, where steady state data was sorted according to $p_3$. That is, Figure 2 compares an estimated $p_3$ 29 with a $p_3$ interval represented by an estimated upper 28 and an estimated lower bound 27 derived from efficiency bounds. The lower $p_3$ bound 27 may provide the maximum turbocharger efficiency and the upper $p_3$ bound 28 may provide minimum turbocharger efficiency. Because the turbocharger efficiency cannot be higher than 1.0, the lower $p_3$ bound 27 may be reliable. It is possible to trust with a high degree of confidence that the true $p_3$ cannot be lower than the lower bound 27. The confidence in the upper bound 28 may be lower than the confidence in the lower bound 27 because the natural lower bound 27 on the turbocharger efficiency $\eta_{tc} > 0$ may lead to a useless bound on the pressure $p_3$, such as $p_3 < \infty$.

In some cases, it may be more difficult to find a realistic lower bound 27 for the efficiency than the upper bound 28. For example, the efficiency may not be higher than the peak efficiency of a new turbocharger of a given type.

Using the lower bound 27 on $p_3$, a lower bound on $\dot{m}_{EGR}$ may be derived using the valve flow model. At the same time, the lower bound on $\dot{m}_t$ can be derived using the turbine flow model. When combining this information together with the mass conservations equations, one gets both upper and lower bounds both based on the upper limit on the turbocharger efficiency:

$$\dot{m}_{EGR} > \dot{m}_{EGR,Low}$$

$$\dot{m}_{EGR} < \dot{m}_{ch} - \dot{m}_{t,Low} + \dot{m}_f$$

In some cases, the approach may include using the EGR valve flow model and the turbine flow model, both lower and upper bounds on EGR mass flow rate may be derived from just an upper bound on the turbocharger efficiency, which may be reliably set or determined. It may be noted that the same may hold for upper and lower bounds on the fresh air flow rate which can also be derived from just an upper bound on the turbocharger efficiency:

$$\dot{m}_a < \dot{m}_{ch} - \dot{m}_{EGR,Low}$$

$$\dot{m}_a > \dot{m}_{t,Low} - \dot{m}_f$$

It may be noted that just a one sided constraint on turbocharger efficiency may lead to two sided constraints on the unknown flows.

Further, the approach may include calculating the fresh air mass flow and/or the EGR mass flow utilizing the calculated fuel mass flow and the charge mass flow in view of on the mass conservation in the engine. The fact that EGR mass flow is both an input and output to these calculations is not necessarily contradictory. The EGR valve mass flow value defined by the valve characteristics may be corrected and made more accurate in the process when the mutual correlations between the flows are used.

The calculation may result in "fast" but possible offset estimates based on the model. A fast estimate means that there is no noticeable delay in the flow estimates relative to the true flow value. At the same time, the flow estimates may often be offset because the turbine characteristics, volumetric efficiency and valve flow function or valve cross section, as well as other properties, are never known accurately, and they may be subject to random changes or drifts during the vehicle life.

One distinctive feature of the present system may be how a lambda sensor is used to remove the offset from "fast" mass flow estimates that are based on a turbine model, EGR valve model, and engine volumetric efficiency model, and possibly other models. A lambda sensor, virtually located anywhere in the exhaust gas stream, may be used to correct the flow estimates reducing the offset. The lambda sensors may sense the oxygen mole fraction $O_2$ (e.g., oxygen content of exhaust gas) which is related to the fresh air mass flow and fuel mass flow. An exact relationship depends on the fuel composition and specific air humidity $H_s$ (water mass fraction in the air). As an example, the following relationship may be derived for fuel composition $C_{12}H_{23}$,

$$\dot{m}_a = \frac{\dot{m}_f(3.065 + 0.992 O_2)}{0.21(1 - H_s) - O_2(1 + 0.602 H_s)} \ .$$

The above equation may define a way in how the fresh air mass flow $\dot{m}_a$ can be calculated from the lambda sensor; or from exhaust gas $O_2$ mole fraction, which was calculated from a lambda sensor output. However, it may be noted that such calculation may lead to a poor air flow estimate in numerous situations for the following reasons: 1) The lambda sensor output may be unavailable until it reaches sufficient temperature; 2) The denominator of the above formula is small and approaching zero for oxygen mole fractions close to 0.21 (that of dry fresh air), and the result of division may then have a very large relative error due to usually not accurately known, or completely unknown, air humidity and due to small but nonzero lambda sensor error; 3) The lambda sensor placed between or after the aftertreatment devices may further increase the error because being affected by oxidation reactions in the devices such as soot oxidation in the DPF; and 4) The lambda sensor can have significant delay up to 3 seconds and the $\dot{m}_a$ calculations may thus not be necessarily accurate during non-steady state operation of the engine. For these reasons, the $\dot{m}_a$ usually cannot be calculated from lambda directly at least when any of the above items (1-4) may play a role or when the lambda sensor is a low grade slow sensor.

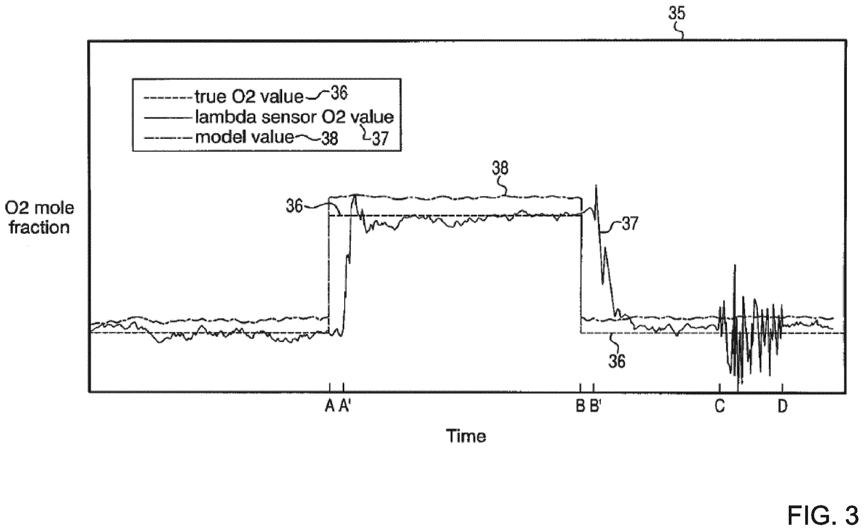

Figure 3 is a diagram of a lambda sensor behavior graph 35. A possible behavior of the $O_2$ mole fraction derived from lambda sensor signal 37 compared to the theoretical true $O_2$ value 36 and also value 38 calculated from the model equations is in graph 35. It may be noted that when the true $O_2$ value 36 changes at point A or B, the model may be able to predict the change without noticeable delay. However, the model predicted value 38 may be slightly offset for reasons explained before. The $O_2$ value 37 derived from the lambda signal will usually not be offset, or at least the offset will be smaller. However, it may take the lambda sensor (value 37) some time, A-A' or B-B', to reach the true $O_2$ value 36. Also, lambda sensor signal 37 may be noisy and difficult to interpret during transient periods between A-A' and B-B'. Moreover, lambda signal 37 may be affected by other processes, e.g., soot oxidations, and signal 37 may be sometimes temporarily inaccurate like between C and D.

A particular feature of the disclosure is an approach of calculating the theoretical "fast" lambda value 38 from the fuel mass flow, EGR mass flow and turbine mass flow estimates, which are not delayed but may be possibly offset. A lambda value 37 (having a dynamic delay) may be considered in a correction of flow estimates. The correction may slowly adjust the EGR valve and turbine model parameters to match the sensed lambda during more or less steady operation of the engine. The correction may be stronger or correction process may be faster when the lambda sensor operates in the favorable conditions and the lambda signal is steady. The correction may be almost none when the lambda sensor possibly operates in unfavorable conditions or during a transient. The correction may be based on calculated sensitivities of the lambda with respect to the adjusted parameters. This sensitivity calculation may involve lambda sensor model, including a dynamic model of the sensor delay, such as lambda sensor time constant and dead time. The correction process may be disengaged during periods of time the lambda not available, e.g., because the lambda sensor has not yet reached the working temperature after a cold start. It may be noted that the disclosed approach may still be providing valid flow estimates although the offset may not be fully corrected during these periods. Also considered in the correction may be a relationship between an $O_2$ mole fraction (i.e., a quantity sensed by the lambda sensor) and the air and fuel flows, and how this relationship may be affected by possibly uncertain air humidity.

Various approaches may be noted in the following text. An estimation approach may incorporate calculating fast but possibly offset EGR and air flow estimates using an intake manifold pressure sensor, and temperature sensors if available, turbocharger-speed sensor if available, as well as other available sensors, and finally correcting the offset of these estimates using a lambda sensor signal.

By fast but possibly offset estimates may mean that the flow estimates do not necessarily have any noticeable delay with respect to the true flows but they can be offset systematically because of parameter variations during a vehicle lifetime such as, for example, slow changes in the valve characteristics caused by fouling or soot deposits, or degradation of the turbocharger efficiency. By using the lambda signal, the offset may be removed.

An estimation approach may incorporate calculating fast but possibly an offset EGR and air flows combining EGR valve and turbine(s) plus post turbine elements (e.g., aftertreatment) mass flow models based on sensed or estimated inlet conditions $p_3$ and $T_3$, and making use of a turbo-speed sensor 33 if such turbo-speed sensor is available, which may parameterize the turbine mass flow model. For engines with two or more turbines, the approach may be generalized by treating the cascade of turbines almost as the single turbine.

An estimation approach may incorporate calculating fast but possibly offset EGR and air flows by combining the EGR valve and turbine(s) plus post turbine elements (e.g., aftertreatment) mass flow models where the relative contributions of the EGR valve and turbine(s) plus post turbine elements flow models are changed dynamically reflecting a variability of the accuracies of the flow models which may depend on current pressure ratios. An approach may incorporate estimating $T_3$ using a simplified combustion process model and estimating $p_3$ using a turbocharger model.

An estimation approach may combine a dynamically correct (fast) but possibly offset EGR and air flow estimates with a lambda signal to remove the steady-state offset during periods of time lambda signal is healthy and making use of low frequency component of the lambda signal instead of converting the lambda signal to the air mass flow directly.

An approach may incorporate combining the fast but possibly offset flow estimates with a slow lambda signal using a lambda sensor dynamic model (e.g., a transfer function modelling the lambda sensor dynamics, sensor time constant or interval for an unknown or randomly varying sensor time constant, and sensor dead time, or interval for unknown or randomly varying sensor dead time, or similar statistical, probabilistic, or interval sensor models).

An approach may incorporate adjusting the turbine efficiency, EGR valve flow functions, or other model properties to match the $O_2$ mole fraction sensed by lambda sensor in a steady-state.

A lambda sensor in the noted approaches of the present system may have performance specifications of delay ranging between 1 and 3 seconds depending on the flow velocity and gas parameters, and accuracy often worse than 2 percent. A greater part of the sensor inaccuracy may not necessarily be a property of the lambda sensor but due to additional processes in the system in the aftertreatment. The lambda sensors located in the aftertreatment may be partly affected by chemical reactions in the aftertreatment, some of which may change the oxygen mole fraction to certain degree. This may further decrease the accuracy of the air flow calculation from these sensors. Such a signal may be regarded as poor compared to many typical lambda sensors which may have performance accuracy specifications 2 percent or better. Although such lambda signals may be inappropriate for direct conversion to the air mass flow signal, they may be used to adjust the uncertain or drifting model parameters. Such lambdas located in the in the aftertreatment may be a quite inexpensive solution for the purpose of inferential sensing because they may already be installed for the purposes of aftertreatment control, e.g., urea dosing control, and they may be reused by the inferential sensor.

A distinctive feature of the proposed inferential sensing approach may use the lambda signal for a purpose of model parameters adaptations, e.g., to detect random changes in the system parameters over the vehicle lifetime. At the same time, lambda is not necessarily used to calculate the air flow directly. Therefore, the $O_2$ sensing sensors which would not be suitable for such conversion due to large dynamic delay may still be used.

Lambda may be a part of the $NO_x$ sensor. By further noting that the lambda signal has a lag, one may distinguish the present system from other systems on this characteristic, which may use lambda, and may calculate the fresh air flow from lambda directly using known correlations between lambda, air flow, and fuel mass flow. The present system may challenge a use of laggy lambda signals. Laggy signals of an instrument or detector may lag in that they are slow in revealing or indicating a parameter, characteristic, property, or the like being detected, measured, indicated, and/or so forth. Time delays typically encountered when using the lambda in the $NO_x$ sensor may range from 1 to 3 seconds, and the delays may vary depending on the conditions in the exhaust system and may be thus better characterized as intervals of delays or probability of delay values. Furthermore, a lambda sensor signal from an aftertreatment may not necessarily only be delayed but it may simply be almost random during a heavily transient operation. An advantage of the subject lambda is low cost and an easy adaption of the lambda to the inferential determination of EGR mass flow in the present system and approach.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

**Claims**

1. An inferential exhaust manifold pressure detection device comprising:

   an exhaust gas recirculation (EGR) valve (16) having a first input, an output and a second input;
   an exhaust manifold (71) of an engine having an output connected to the first input of the EGR valve and to an input of a turbine (18), and having an input connected to exhaust ports of cylinders of the engine;
   an intake manifold (70) of the engine having an input connected to the output of the EGR valve and to an output of a compressor (56), and an output connected to intake ports of the cylinders;
   a pressure sensor (10) situated in the intake manifold; and
   a processor (60) having an input connected to the pressure sensor and an output; and wherein:

   the processor is configured to calculate an inlet pressure of the EGR valve based on a pressure from the pressure sensor, a turbine power versus compressor power balance in view of an efficiency of the turbine and an efficiency of the compressor, and flow equations representing a mass conservation of the engine, wherein the inlet pressure of the EGR valve is essentially equal to a pressure in the exhaust manifold; and wherein
   the processor is configured to detect one or both of an EGR valve failure and an intake air leakage failure when a turbocharger efficiency is in an Efficiency Island, wherein both of the compressor and the turbine have high, substantially flat, and almost constant efficiencies at an area of operating points defining the Efficiency Island and wherein the turbine efficiency and the compressor efficiency fall rapidly to zero along a border of the Efficiency Island; wherein the processor is blocked from detecting an EGR valve failure and an intake air leakage failure when the turbocharger efficiency is outside of the Efficiency Island, and wherein the processor is configured to determine a control signal for the EGR valve based on the calculated inlet pressure of the EGR and outputs the control signal to the EGR valve.

2. The device of claim 1, wherein the processor is configured to:

   determine the compressor power balance based on a turbocharger angular velocity signal from a physical turbo speed sensor; and

derive a power of a turbocharger acceleration from a time derivative of the turbocharger angular velocity signal.

3. The device of claim 1, wherein the processor is configured to calculate the inlet pressure of the EGR valve as an interval of possible values based on intervals of turbocharger efficiency.

4. The device of claim 3, wherein the intervals of turbocharger efficiency are a product of a compressor efficiency and a turbine efficiency and the processor determines a maximum value of the product by finding a maximum value in the turbocharger map.

5. The device of claim 1, wherein the processor is configured to calculate a lower bound for the inlet pressure of the EGR valve based on a maximum possible turbocharger efficiency.

6. The device of claim 5, wherein the processor is configured to use the lower bound for the inlet pressure of the EGR valve to calculate an interval containing a fresh air mass flow rate and an interval containing an EGR mass flow rate.

7. The device of claim 1, wherein the processor is configured to detect an EGR valve blockage based on an upper bound for an EGR mass flow rate when determining that the EGR mass flow rate is not sufficient for a given valve opening angle.

8. The device of claim 1, wherein the processor is configured to detect an intake system air leakage based on a lower bound on a fresh mass flow rate when determining the fresh mass flow rate.

9. A method for inferring a pressure at an exhaust manifold of an engine having a turbocharger, the method comprising:

detecting a pressure in an intake manifold (70) connected to an engine;
calculating an inlet pressure of an exhaust manifold (71) connected to the engine based on the detected pressure in the intake manifold, a turbine power versus compressor power balance, and flow equations representing a mass conservation of the engine, wherein the inlet pressure of the exhaust manifold is essentially equal to an inlet pressure of the EGR valve;
detecting one or both of an EGR valve failure and an intake air leakage failure when a turbocharger efficiency is in an Efficiency Island, where both of the compressor and the turbine have high, substantially flat, and almost constant efficiencies at an area of operating points defining the Efficiency Island and the turbine efficiency and the compressor efficiency fall rapidly to zero along a border of the Efficiency Island;
blocking the detecting of an EGR valve failure and an intake air leakage failure when the turbocharger efficiency is outside of the Efficiency Island;
determining a control signal for an exhaust gas recirculation (EGR) valve (16) based on the calculated inlet pressure in the exhaust manifold; and
outputting the control signal for the EGR valve to the EGR valve.

10. The method of claim 9, wherein the inlet pressure of the exhaust manifold is calculated as an interval of possible values based on intervals of turbocharger efficiency.

**Patentansprüche**

1. Inferenzdruckerfassungsvorrichtung für Abgaskrümmer, umfassend:

ein Abgasrückführungs-(AGR)-Ventil (16) mit einem ersten Eingang, einem Ausgang und einem zweiten Eingang;
einen Abgaskrümmer (71) eines Motors, wobei der Abgaskrümmer einen Ausgang aufweist, der mit dem ersten Eingang des AGR-Ventils und mit einem Eingang einer Turbine (18) verbunden ist, und einen Eingang aufweist, der mit den Abgasöffnungen von Zylindern des Motors verbunden ist;
einen Ansaugkrümmer (70) des Motors, wobei der Ansaugkrümmer einen Eingang aufweist, der mit dem Ausgang des AGR-Ventils und mit einem Ausgang eines Verdichters (56) verbunden ist, und einen Ausgang aufweist, der mit den Ansaugöffnungen der Zylinder verbunden ist;
einen Drucksensor (10), der im Ansaugkrümmer angeordnet ist; und
einen Prozessor (60), der einen mit dem Drucksensor verbundenen Eingang und einen Ausgang aufweist; und wobei:

der Prozessor dafür ausgelegt ist, einen Eingangsdruck des AGR-Ventils basierend auf einem Druck vom Drucksensor, einer Turbinenleistungs- gegenüber Verdichterleistungsbilanz im Hinblick auf einen Wirkungsgrad der Turbine und einen Wirkungsgrad des Verdichters, und Strömungsgleichungen zu berechnen, die eine Massenerhaltung des Motors repräsentieren, wobei der Eingangsdruck des AGR-Ventils im Wesentlichen gleich einem Druck im Abgaskrümmer ist; und wobei der Prozessor dafür ausgelegt ist, einen oder beide von einem AGR-Ventilfehler und einem Ansaugluftleckagefehler zu erfassen, wenn sich ein Turboladerwirkungsgrad in einem Wirkungsgrad-Inselbereich befindet, wobei sowohl der Verdichter als auch die Turbine hohe, im Wesentlichen flache und nahezu konstante Wirkungsgrade in einem Bereich von Betriebspunkten aufweisen, die den Wirkungsgrad-Inselbereich definieren, und wobei der Turbinenwirkungsgrad und der Verdichterwirkungsgrad entlang einer Grenze des Wirkungsgrad-Inselbereichs schnell auf null fallen; wobei der Prozessor daran gehindert wird, einen AGR-Ventilfehler und einen Ansaugluftleckagefehler zu erkennen, wenn der Turboladerwirkungsgrad außerhalb des Wirkungsgrad-Inselbereichs liegt, und wobei der Prozessor dafür ausgelegt ist, ein Steuersignal für das AGR-Ventil basierend auf dem berechneten Eingangsdruck der AGR zu bestimmen und das Steuersignal an das AGR-Ventil auszugeben.

2. Vorrichtung nach Anspruch 1, wobei der Prozessor für Folgendes ausgelegt ist:

Bestimmen der Verdichterleistungsbilanz basierend auf einem Turbolader-Winkelgeschwindigkeitssignal von einem physischen Turbodrehzahlsensor; und
Ableiten einer Stärke einer Turboladerbeschleunigung aus einer Zeitableitung des Turbolader-Winkelgeschwindigkeitssignals.

3. Vorrichtung nach Anspruch 1, wobei der Prozessor dafür ausgelegt ist, den Eingangsdruck des AGR-Ventils als ein Intervall von möglichen Werten basierend auf Intervallen des Turboladerwirkungsgrads zu berechnen.

4. Vorrichtung nach Anspruch 3, wobei die Intervalle des Turboladerwirkungsgrads ein Produkt aus einem Verdichterwirkungsgrad und einem Turbinenwirkungsgrad sind und der Prozessor einen Maximalwert des Produkts bestimmt, indem er einen Maximalwert im Turboladerkennfeld sucht.

5. Vorrichtung nach Anspruch 1, wobei der Prozessor dafür ausgelegt ist, eine untere Grenze für den Eingangsdruck des AGR-Ventils basierend auf einem maximal möglichen Turboladerwirkungsgrad zu berechnen.

6. Vorrichtung nach Anspruch 5, wobei der Prozessor dafür ausgelegt ist, die untere Grenze für den Eingangsdruck des AGR-Ventils zu verwenden, um ein Intervall zu berechnen, das einen Frischluftmassendurchsatz enthält, und ein Intervall, das einen AGR-Massendurchsatz enthält.

7. Vorrichtung nach Anspruch 1, wobei der Prozessor dafür ausgelegt ist, eine AGR-Ventilblockade basierend auf einer oberen Grenze für einen AGR-Massendurchsatz zu erfassen, wenn bestimmt wird, dass der AGR-Massendurchsatz für einen gegebenen Ventilöffnungswinkel nicht ausreichend ist.

8. Vorrichtung nach Anspruch 1, wobei der Prozessor dafür ausgelegt ist, eine Luftleckage im Ansaugsystem basierend auf einer unteren Grenze für einen Frischmassendurchsatz zu erfassen, wenn der Frischmassendurchsatz bestimmt wird.

9. Verfahren zum Herleiten eines Drucks an einem Abgaskrümmer eines Motors mit einem Turbolader, wobei das Verfahren Folgendes umfasst:

Erfassen eines Drucks in einem Ansaugkrümmer (70), der mit einem Motor verbunden ist;
Berechnen eines Eingangsdrucks eines mit dem Motor verbundenen Abgaskrümmers (71) basierend auf dem erfassten Druck im Ansaugkrümmer, einer Turbinenleistungs- gegenüber Verdichterleistungsbilanz, und Strömungsgleichungen, die eine Massenerhaltung des Motors repräsentieren, wobei der Eingangsdruck des Abgaskrümmers im Wesentlichen gleich einem Eingangsdruck des AGR-Ventils ist;
Erfassen eines oder beides von einem AGR-Ventilfehler und einem Eingangsluftleckagefehler, wenn sich ein Turboladerwirkungsgrad in einem Wirkungsgrad-Inselbereich befindet, wobei sowohl der Verdichter als auch die Turbine hohe, im Wesentlichen flache und nahezu konstante Wirkungsgrade in einem Bereich von Betriebspunkten aufweisen, die den Wirkungsgrad-Inselbereich definieren, und der Turbinenwirkungsgrad und der Verdichterwirkungsgrad entlang einer Grenze des Wirkungsgrad-Inselbereichs schnell auf null fallen;
Blockieren der Erfassung eines AGR-Ventilfehlers und eines Eingangsluftleckagefehlers, wenn sich der Turboladerwirkungsgrad außerhalb des Wirkungsgrad-Inselbereichs befindet;
Bestimmen eines Steuersignals für ein Abgasrückführungs-(AGR)-Ventil (16) basierend auf dem berechneten Eingangsdruck im Abgaskrümmer; und
Ausgeben des Steuersignals für das AGR-Ventil an das AGR-Ventil.

10. Verfahren nach Anspruch 9, wobei der Eingangsdruck des Abgaskrümmers als ein Intervall von möglichen Werten basierend auf Intervallen des Turboladerwirkungsgrads berechnet wird.

**Revendications**

1.   Dispositif de détection inférentiel de pression de collecteur d'échappement comprenant :

une soupape de recirculation de gaz d'échappement (EGR) (16) ayant une première entrée, une sortie et une deuxième entrée ; un collecteur d'échappement (71) d'un moteur avec une sortie qui est raccordée à la première entrée de la soupape EGR et à une entrée d'une turbine (18), et avec une entrée qui est raccordée aux orifices d'échappement des cylindres du moteur ; un collecteur d'admission (70) du moteur avec une entrée qui est raccordée à la sortie de la soupape EGR et à une sortie d'un compresseur (56), et une sortie qui est raccordée aux orifices d'admission des cylindres ; un capteur de pression (10) situé dans le collecteur d'admission ; et un processeur (60) avec une entrée qui est connectée au capteur de pression et une sortie ; et dans lequel :

le processeur est configuré pour calculer une pression d'entrée de la soupape EGR sur la base d'une pression provenant du capteur de pression, un équilibre de la puissance de turbine par rapport à la puissance de compresseur en vue d'un rendement de la turbine et d'un rendement du compresseur, et des équations de flux représentant une conservation massique du moteur, la pression d'entrée de la soupape EGR étant essentiellement égale à une pression dans le collecteur d'échappement ; et dans lequel le processeur est configuré pour détecter une défaillance, ou les deux défaillances, parmi une défaillance de soupape EGR et une défaillance de fuite d'air d'admission lorsqu'un rendement du turbocompresseur se trouve dans une zone d'efficacité maximale (« Efficiency Island »), où à la fois le compresseur et la turbine ont des rendements élevés, substantiellement plats, et quasi constants au niveau d'une aire de points d'exploitation définissant la zone d'efficacité maximale et où le rendement de la turbine et le rendement du compresseur chutent rapidement à zéro le long d'une limite de la zone d'efficacité maximale ; dans lequel le processeur est empêché de détecter une défaillance de soupape EGR et une défaillance de fuite d'air d'admission lorsque le rendement du turbocompresseur se situe en dehors de la zone d'efficacité maximale, et dans lequel le processeur est configuré pour déterminer un signal de commande pour la soupape EGR sur la base de la pression d'entrée calculée de l'EGR et délivre le signal de commande à la soupape EGR.

2.   Dispositif de la revendication 1, dans lequel le processeur est configuré pour :

déterminer l'équilibre de puissance de compresseur sur la base d'un signal de vitesse angulaire de turbocompresseur provenant d'un capteur de vitesse turbo physique ; et dériver une puissance d'une accélération de turbocompresseur depuis une dérivée temporelle du signal de vitesse angulaire de turbocompresseur.

3.   Dispositif de la revendication 1, dans lequel le processeur est configuré pour calculer la pression d'entrée de la soupape EGR en tant qu'intervalle de valeurs possibles sur la base d'intervalles du rendement de turbocompresseur.

4.   Dispositif de la revendication 3, dans lequel les intervalles de rendement de turbocompresseur sont le produit d'un rendement de compresseur et d'un rendement de turbine et le processeur détermine une valeur maximale du produit en trouvant une valeur maximale dans la carte du turbocompresseur.

5.   Dispositif de la revendication 1, dans lequel le processeur est configuré pour calculer un minorant pour la pression d'entrée de la soupape EGR sur la base d'un rendement maximum possible de turbocompresseur.

6.   Dispositif de la revendication 5, dans lequel le processeur est configuré pour utiliser le minorant pour la pression d'entrée de la soupape EGR afin de calculer un intervalle contenant un débit massique d'air frais et un intervalle contenant un débit massique d'EGR.

7.   Dispositif de la revendication 1, dans lequel le processeur est configuré pour détecter un blocage de la soupape EGR sur la base d'un majorant pour un débit massique d'EGR lors de la détermination du fait que le débit massique d'EGR n'est pas suffisant pour un angle d'ouverture donné de la soupape.

8.   Dispositif de la revendication 1, dans lequel le processeur est configuré pour détecter une fuite d'air de système d'admission sur la base d'un minorant sur un débit massique frais lors de la détermination du débit massique frais.

9. Procédé pour déduire une pression au niveau d'un collecteur d'échappement d'un moteur possédant un turbocompresseur, le procédé comprenant :

la détection d'une pression dans un collecteur d'admission (70) raccordé à un moteur ;
le calcul d'une pression d'entrée d'un collecteur d'échappement (71) raccordé au moteur sur la base de la pression détectée dans le collecteur d'admission, un équilibre de la puissance de turbine par rapport à la puissance de compresseur, et des équations de flux représentant une conservation massique du moteur, la pression d'entrée du collecteur d'échappement étant essentiellement égale à une pression d'entrée de la soupape EGR ;
la détection d'une défaillance, ou des deux défaillances, parmi une défaillance de soupape EGR et une défaillance de fuite d'air d'admission lorsqu'un rendement du turbocompresseur se trouve dans une zone d'efficacité maximale (« Efficiency Island »), où à la fois le compresseur et la turbine ont des rendements élevés, substantiellement plats, et quasi constants au niveau d'une aire de points d'exploitation définissant la zone d'efficacité maximale et le rendement de la turbine et le rendement du compresseur chutant rapidement à zéro le long d'une limite de la zone d'efficacité maximale ;
le blocage de la détection d'une défaillance de soupape EGR et d'une défaillance de fuite d'air d'admission lorsque le rendement du turbocompresseur se situe en dehors de la zone d'efficacité maximale ;
la détermination d'un signal de commande pour une soupape de recirculation de gaz d'échappement (EGR) (16) sur la base de la pression d'entrée calculée dans le collecteur d'échappement ; et
la délivrance du signal de commande pour la soupape EGR à la soupape EGR.

10. Procédé de la revendication 9, dans lequel la pression d'entrée du collecteur d'échappement est calculée en tant qu'intervalle de valeurs possibles sur la base d'intervalles du rendement de turbocompresseur.

FIG. 1

EP 3 327 273 B1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1416138 A2
- FR 2856738 A1